# EUROPÄISCHE PATENTSCHRIFT

(11) **EP 1 396 925 B1**
(45) Veröffentlichungstag und Bekanntmachung des Hinweises auf die Patenterteilung: **23.05.2018**
(21) Anmeldenummer: 03017160.7
(22) Anmeldetag: 29.07.2003
(51) Int. Cl.: H02M 5/458, H02M 7/5387

(54) **Ladeschaltung für einen Umrichter**
Charging circuit for a converter
Circuit de charge pour un convertisseur

(30) Priorität: 05.09.2002 DE 10241036
(43) Veröffentlichungstag der Anmeldung: 10.03.2004
(73) Patentinhaber: Dr. Johannes Heidenhain GmbH, 83301 Traunreut (DE)
(72) Erfinder: Huber, Norbert, 83317 Teisendorf (DE); Ritz, Franz, 83236 Übersee (DE)

(56) Entgegenhaltungen:
- EP-A- 0 621 148
- EP-A- 0 730 339
- DE-U1- 9 216 662
- US-A1- 2002 051 371

## Beschreibung

Die Erfindung betrifft eine Ladeschaltung für einen Umrichter gemäß Anspruch 1. Vorteilhafte Ausführungsformen sind in den abhängigen Ansprüchen definiert. Ladeschaltungen für Umrichter werden benötigt, um die im Zwischenkreis eines Umrichters vorhandene große Kapazität sicher zu laden, noch bevor die eigentliche Stromversorgung des Umrichters zugeschaltet wird.

Die Entwicklung moderner Umrichter erlaubt den effektiven Einsatz von elektrischen Antrieben in immer weiteren Bereichen der Technik. Indem die zur Verfügung stehende Netzspannung zunächst gleichgerichtet und dann über einen Wechselrichter zur Ansteuerung eines Motors geeignet aufbereitet wird, lassen sich sehr genaue Regelstrecken für die Position oder die Geschwindigkeit eines Antriebes realisieren. Dies findet z.B. in Werkzeugmaschinen eine wichtige Anwendung. Nach der Gleichrichtung der Netzspannung ist es üblich, im sogenannten Zwischenkreis eine Glättung der Spannung und eine Speicherung von Energie mittels eines Zwischenkreiskondensators mit hoher Kapazität vorzunehmen. Ein solcher Zwischenkreiskondensator muß bei Inbetriebnahme des Umrichter zunächst geladen werden, hierzu dient oft eine spezielle Ladeschaltung. Um den Ladestrom des Zwischenkreiskondensators nicht zu groß werden zu lassen, sind Mittel zum Begrenzen des Ladestromes notwendig. Es können z.B. einfache Widerstände oder auch Konstantstromquellen zum Einsatz kommen.

Die EP 0730339 A2 beschreibt einen Umrichter, der trotz abrupter Phasenänderungen in der Eingangsspannung stabil arbeitet. Hierzu wird die zugeführte Wechselspannung in bestimmten Betriebszuständen vom Umrichter getrennt.

Die DE 9216662 U1 beschäftigt sich mit dem Vorladen eines Zwischenkreiskondensators in einem netzgeführten Stromrichter. Dabei kommen passive Bauelemente zum Einsatz. Die US 2002/0051371 A1 beschreibt demgegenüber einen Umrichter mit einer Strombegrenzungsschaltung für den Ladestrom eines Zwischenkreiskondensators, wobei die Begrenzungsschaltung eine Vielzahl von Halbleiterschaltern aufweist.

Die EP 0621148 A2 beschreibt schließlich eine Konstantstromquelle zum Laden eines Zwischenkreiskondensators.

In der DE 10148740 ist beschrieben, wie es trotz einer solchen Strombegrenzung mittels Widerstand oder Konstantstromquelle zu einem zu hohen Ladestrom kommen kann. Liegt nämlich am Ausgang des Umrichters, also z.B. im angeschlossenen Motor, ein Erdschluß vor, so kann ein sehr hoher Ladestrom über eine der Freilaufdioden des Wechselrichters fließen und Schäden im Umrichter verursachen. Dieser hohe Strom kann zwar nur bei ungeladenem Zwischenkreiskondensator fließen, die hohe Kapazität des Zwischenkreiskondensators läßt aber Ströme mit zerstörerischer Wirkung zu. In der DE 10148740 wird daher eine Schaltung beschrieben, die vorab einen Erdschluß erkennen kann und in einem solchen Falle die Inbetriebnahme des Umrichters verhindert.

Da es aber mit einer übergeordneten Steuerung durchaus möglich ist, einen solchen Erdschluß genauer zu lokalisieren, ist eine Inbetriebnahme des Umrichters trotz erkanntem Erdschluß zu Diagnosezwecken wünschenswert.

Hierzu ist eine Ladeschaltung notwendig, die trotz eines Erdschlusses am Ausgang des Umrichters die Aufladung des Zwischenkreiskondensators mit begrenztem Strom erlaubt. Ist der Zwischenkreiskondensator erst einmal geladen, so spielt der oben erwähnte Fehlermechanismus keine Rolle mehr, seitens der Steuerung kann nun ein Diagnoseprogramm zur Lokalisierung des Erdschlusses durchgeführt werden.

Aufgabe der Erfindung ist es daher, eine Ladeschaltung für einen Umrichter anzugeben, die dessen Inbetriebnahme auch bei einem Erdschluß am Ausgang des Umrichters erlaubt.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird nun vorgeschlagen, zusätzlich zur üblicherweise in einer der Zuleitungen zum Zwischenkreiskondensator vorhanden Konstantstromquelle eine zweite Konstantstromquelle in der zweiten Zuleitung zum Zwischenkreiskondensator vorzusehen. Um den Aufwand für diese Maßnahme aber nicht zu groß werden zu lassen, wird dabei auf eine zweite Ansteuerelektronik für diese zweite Konstantstromquelle verzichtet. Es wurde erkannt, daß es genügt, die beiden Konstantstromquellen parallel mit einer einzigen Ansteuerelektronik zu kontrollieren. Dabei kann auch auf einen zweiten Stromsensor verzichtet werden, es genügt ein Stromsensor in einer der beiden Zuleitungen zum Zwischenkreiskondensator.

Mit einer solchen Schaltung ist es möglich, den Zwischenkreiskondensator kontrolliert zu laden, auch wenn am Ausgang des Umrichters ein Erdschluß vorliegt.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine schematische Darstellung eines,Antriebes
- Figur 2: eine Ladeschaltung für einen Umrichter

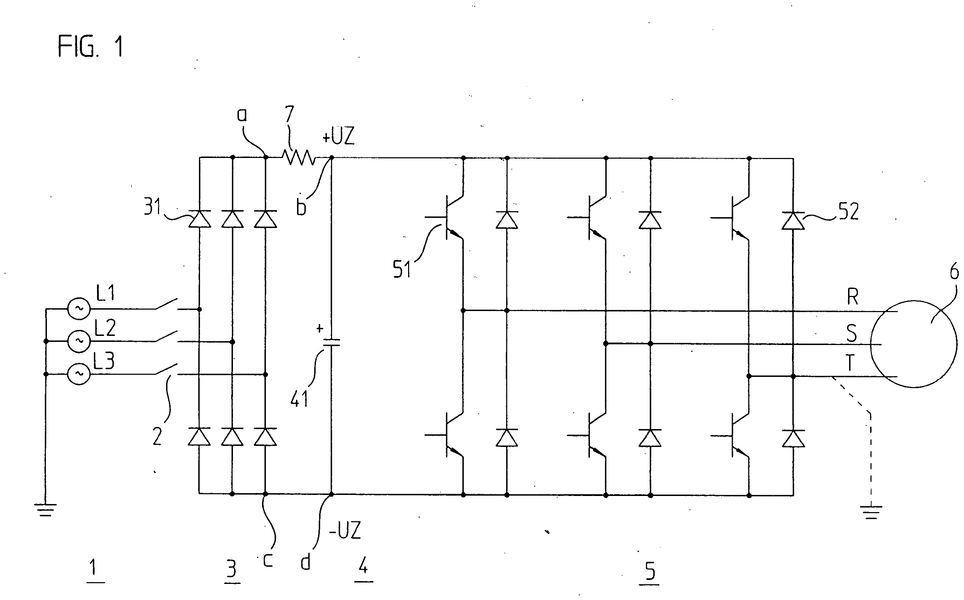

In Figur 1 ist schematisch ein herkömmlicher Antrieb dargestellt. Netzseitig wird eine Wechselspannung in drei Phasen L1, L2, L3 zu Verfügung gestellt. Diese Wechselspannung wird über ein Laderelais auf einen Gleichrichter 3 mit Gleichrichterdioden 31 in üblicher Brückenschaltung geleitet. Die so erzeugte wellige Gleichspannung wird über einen Widerstand 7 dem Zwischenkreis 4 mit einem Zwischenkreiskondensator 41 zugeführt. Der Widerstand 7 begrenzt den Ladestrom, der bei Inbetriebnahme des Umrichters zum Zwischenkreiskondensator 41 fließt. Die durch den Zwischenkreiskondensator 41 geglättete und stabilisierte Gleichspannung wird nun durch einen Wechselrichter 5 in geeignete Wechselspannung mit den Phasen R, S, T zum Betrieb eines Motors 6 umgewandelt. Dabei kommt z.B. eine Pulsweitenmodulation zum Einsatz. Je nach Bedarf werden die Leistungstransistoren 51 des Umrichters 5 durch eine nicht dargestellte Steuerung ein und ausgeschaltet. Freilaufdioden 52 müssen dabei die Ströme aufnehmen, die im Moment der Abschaltung eines Leistungstransistors 51 durch diesen fließen. Die beteiligten Induktivitäten vor allem im angeschlossenen Motor 6 würden sonst Spannungen induzieren, die zur Zerstörung des Motors 6 oder des Wechselrichters 5 führen würden.

Die Freilaufdioden 52 können aber auch zu dem weiter oben bereits erwähnten Problem bei der Inbetriebnahme des Umrichter führen, wenn etwa im Motor ein Erdschluß vorliegt. In der Figur 1 ist ein solcher Erdschluß in der Phase T des Motors gestrichelt angedeutet. Da der Zwischenkreiskondensator 41 noch ungeladen ist, fällt die Gleichspannung des Gleichrichters 3 vollständig über dem Widerstand 7 ab. Der Kontakt b des Zwischenkreiskondensators 41 liegt damit auf negativem Potential -UZ. Erst wenn der Zwischenkreiskondensator 41 geladen ist, fällt die Gleichspannung vollständig über dem Zwischenkreiskondensator 41 ab, der Kontakt b befindet sich dann auf positivem Potential +UZ, der Kontakt d auf negativem Potential - UZ.

Liegt aber der angedeutete Erdschluß vor, so liegt die Anode der in Figur 1 rechten oberen Freilaufdiode 52 auf Erdpotential, und deren Kathode wegen der direkten Verbindung zum Kontakt b bei ungeladenem Zwischenkreiskondensator 41 auf negativem Potential -UZ. Bei einer Spannungsdifferenz von typisch 280V ist diese Freilaufdiode 52 leitend. Der Zwischenkreiskondensator 41 wird über diese Freilaufdiode 52 nun ohne weitere Begrenzung des Stromes geladen, die dabei fließenden Ströme können den Umrichter zerstören.

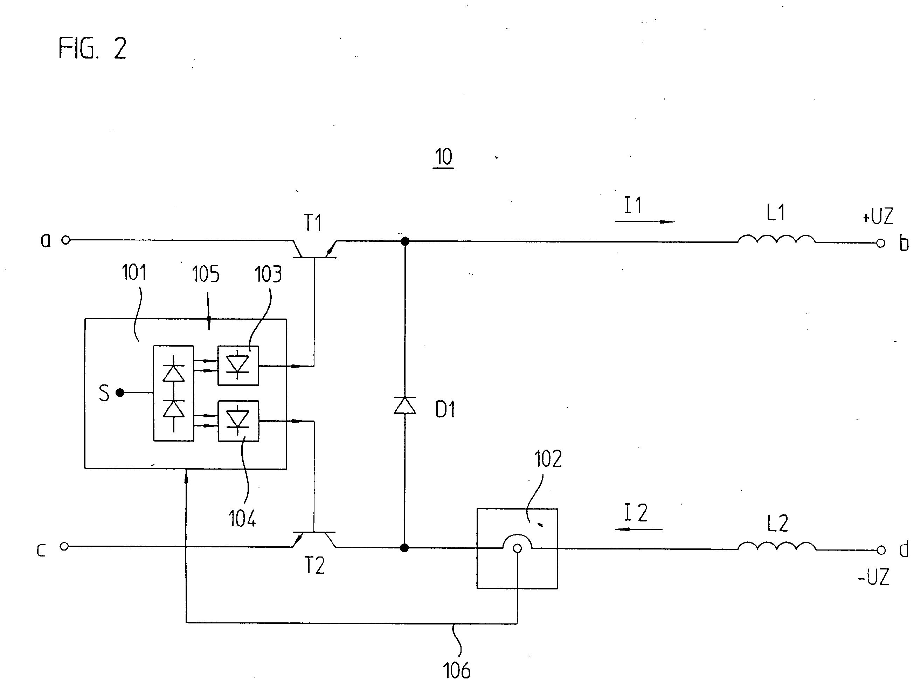

Um dies zu verhindern und trotz des Erdschlusses eine kontrollierte Aufladung des Zwischenkreiskondensators 41 zu ermöglichen, wird die Schaltung der Figur 1 bei den Kontakten a, b, c, d aufgetrennt und eine Schaltung nach Figur 2 eingefügt. Die aus dem oben zitierten Stand der Technik bekannte einfache Strombegrenzung durch einen Widerstand 7 oder eine Konstantstromquelle in der Zuleitung +UZ zum Zwischenkreiskondensator 41 nach Figur 1 wird so durch die Ladeschaltung 10 nach Figur 2 ersetzt.

In beiden Zuleitungen +UZ, -UZ zum Zwischenkreiskondensator 41 liegen nun Konstantstromquellen T1, T2. Eine solche Konstantstromquelle besteht üblicherweise aus einem Leistungstransistor, der abgeschaltet wird, sobald ein Stromsensor einen Strom oberhalb eines Grenzwertes signalisiert, und wieder eingeschaltet wird, sobald der Strom unter einen unteren Grenzwert fällt. Zur Ansteuerung einer solchen Konstantstromquelle ist daher jeweils ein Stromsensor und eine Ansteuerelektronik nötig. Um aber den Aufwand im gegebenen Anwendungsfall klein zu halten, werden die Konstantstromquellen T1, T2 mit lediglich einer Ansteuerelektronik 101 verbunden. Nur in einer der beiden Zuleitungen +UZ, -UZ zum Zwischenkreiskondensator 41 befindet sich ein Stromsensor 102, dessen Ausgangssignal 106 in der Ansteuerelektronik 101 zu einem Ansteuersignal S verarbeitet wird. Ist der gemessene Strom I2 zu groß, so werden beide Konstantstromquellen T1, T2 über dieses gemeinsames Ansteuersignal S abgeschaltet, fällt der Strom unter einen unteren Grenzwert, so werden die Konstantstromquellen T1, T2 eingeschaltet. Die Konstantstromquellen T1, T2 werden also parallel angesteuert, indem ein gemeinsames Ansteuersignal S über den jeweiligen Zustand der Konstantstromquellen T1, T2 entscheidet. Da die Emitter der Leistungstransistoren der Konstantstromquellen T1, T2 auf sehr unterschiedlichem Potential liegen (typisch 560 V Differenz), werden zur deren Ansteuerung sehr unterschiedliche Gatespannungen benötigt. Das gemeinsame Ansteuersignal S eignet sich daher nicht um beide Konstantstromquellen T1, T2 direkt anzusteuern, es ist daher mittels eines Optokopplers 105 von den jeweiligen Treiberstufen 103, 104 der Konstantstromquellen T1, T2 galvanisch getrennt. So können die benötigten unterschiedlichen Gatespannungen der Konstantstromquellen T1, T2 leicht erzeugt werden.

In beiden Zuleitungen +UZ, -UZ zum Zwischenkreiskondensator 41 befinden sich außerdem Drosselspulen L1, L2. Diese Drosselspulen L1, L2 sorgen letztlich dafür, daß auch im Falle eines Erdschlusses der Zwischenkreiskondensator 41 weitestgehend symmetrisch aufgeladen wird. Mit ihrer Induktivität verhindern die Drosselspulen L1, L2 nämlich ein schlagartiges Ansteigen des Stromes I1, I2, wie es bei einem Erdschluß in einem Umrichter nach dem Stand der Technik auftreten würde. Der Strom I1, I2 steigt vielmehr langsam und in den beiden Zuleitungen +UZ, -UZ zum Zwischenkreiskondensator 41 in etwa gleich an. Dieser Anstieg wird beim Erreichen des oberen Grenzwertes von der Ansteuerelektronik 101 unterbrochen. Über eine Freilaufdiode D1 fließt der Strom I1, I2 zunächst weiter und fällt dabei langsam wieder ab, bis die Konstantstromquellen T1, T2 wieder aktiviert werden und der Zyklus erneut beginnt. Während dieses Vorganges wird der Zwischenkreiskondensator 41 kontrolliert und annähernd symmetrisch zum Erdpotential aufgeladen. Der Spannungsabfall über dem Zwischenkreiskondensator 41 steigt dabei beginnend bei 0 V nach dem Einschalten des Laderelais 2 symmetrisch an, bis der Kontakt b auf der positiven Betriebspannung +UZ und der Kontakt d auf der negativen Betriebsspannung -UZ liegt.

Nach der kontrollierten Aufladung des Zwischenkreiskondensator 41 hat die Ladeschaltung 10 ihre Aufgabe erfüllt. Es kann nun beispielsweise über ein Hauptschütz auf eine stärkere Stromversorgung umgeschaltet werden, die Ströme im Bereich von 100A liefern kann, während für den Ladevorgang durch das Laderrelais 2 lediglich Ströme im Bereich von 10A geschaltet werden.

Mit geladenem Zwischenkreiskondensator 41 ist es einer übergeordneten Steuerung nun möglich, ein Diagnoseprogramm durchzuführen, mit dem ein etwaiger Erdschluß genauer lokalisiert werden kann.

Mit der beschriebenen Ladeschaltung 10 kann ein unzulässig hoher Ladestrom des Zwischenkreiskondensators 41 vermieden werden, ohne den üblicherweise notwendigen Aufwand für je eine Konstantstromquelle T1, T2 in beiden Zuleitungen +UZ, -UZ des Zwischenkreiskondensator 41 zu treiben. Vielmehr wird die Ansteuerelektronik 101 der Konstantstromquellen T1, T2 nur einmal benötigt. Es genügt auch, den Ladestrom mit nur einem Stromsensor 102 in einer der beiden Zuleitungen +UZ, -UZ des Zwischenkreiskondensators 41 zu überwachen. Die beschriebene Ladeschaltung 10 erlaubt insbesondere ein kontrolliertes Laden des Zwischenkreiseskondensators 41 auch wenn ein Erdschluß am Ausgang des Wechselrichters 5 vorliegt.

## Patentansprüche

1. Ladeschaltung für einen Umrichter, bei der eine erste Konstantstromquelle (T1) in der ersten Zuleitung (+UZ) zu einem Zwischenkreiskondensator (41) den Ladestrom (I1, I2) des Zwischenkreiskondensators (41) begrenzt, wobei eine zweite Konstantstromquelle (T2) in der zweiten Zuleitung (-UZ) zum Zwischenkreiskondensator (41) liegt, und eine Ansteuerelektronik (101) konfiguriert ist, beide Konstantstromquellen (T1, T2) parallel anzusteuern, **dadurch gekennzeichnet, daß** nur in einer der Zuleitungen (+UZ, -UZ) zum Zwischenkreiskondensator (41) ein Stromsensor (102) vorhanden ist, dessen Ausgangssignal (106) der Ansteuerelektronik (101) zugeführt ist.

2. Ladeschaltung nach Anspruch 1, **dadurch gekennzeichnet, daß** in der Ansteuerelektronik (101) aus dem Ausgangssignal (106) des Stromsensors (102) ein gemeinsames Ansteuersignal (S) für beide Konstantstromquellen (T1, T2) erzeugbar ist.

3. Ladeschaltung nach Anspruch 1 oder 2, **dadurch gekennzeichnet, daß** die Konstantstromquellen (T1, T2) bei einem zu hohen Ausgangssignal (106) des Stromsensors (102) durch die Ansteuerelektronik (101) abschaltbar sind, und bei einem zu niedrigen Ausgangssignal (105) des Stromsensors (102) einschaltbar sind.

4. Ladeschaltung nach einem der vorhergehenden Ansprüche, **dadurch gekennzeichnet, daß** in den Zuleitungen (+UZ, -UZ) zum Zwischenkreiskondensator (41) jeweils eine Drosselspule (L1, L2) vorhanden ist.

5. Ladeschaltung nach Anspruch 4, **dadurch gekennzeichnet, daß** zwischen die Zuleitungen (+UZ, -UZ) eine Freilaufdiode (D1) geschaltet ist, durch die nach Abschaltung der Konstantstromquellen (T1, T2) der in den Zuleitungen (+UZ, -UZ) fließende Ladestrom (I1, I2) aufnehmbar ist.

6. Ladeschaltung nach einem der vorhergehenden Ansprüche, **dadurch gekennzeichnet, daß** in der Ansteuerelektronik (101) Treiberstufen (103, 104) für die Konstantstromquellen (T1, T2) galvanisch vom für die parallele Ansteuerung der Konstantstromquellen (T1, T2) verwendeten Ansteuersignal (S) getrennt sind.

7. Ladeschaltung nach Anspruch 6, **dadurch gekennzeichnet, daß** das Ansteuersignal (S) und die Treiberstufen (103, 104) durch Optokoppler (105) galvanisch getrennt sind.

## Claims

1. Charging circuit for a converter, wherein a first constant current source (T1) in the first feed line (+UZ) to a link circuit capacitor (41) limits the charging current (I1, I2) of the link circuit capacitor (41), wherein a second constant current source (T2) is located in the second feed line (-UZ) to the link circuit capacitor (41), and a drive electronics system (101) is configured to drive the two constant current sources (T1, T2) in parallel, **characterized in that** a current sensor (102) is present in only one of the feed lines (+UZ, -UZ) to the link circuit capacitor (41), the output signal (106) of said current sensor being supplied to the drive electronics system (101).

2. Charging circuit according to Claim 1, **characterized in that**, in the drive electronics system (101), a common drive signal (S) for the two constant current sources (T1, T2) can be generated from the output signal (106) of the current sensor (102).

3. Charging circuit according to Claim 1 or 2, **characterized in that** the constant current sources (T1, T2) can be switched off by the drive electronics system (101) when an output signal (106) of the current sensor (102) is too high and can be switched on when an output signal (105) of the current sensor (102) is too low.

4. Charging circuit according to one of the preceding claims, **characterized in that** an inductor (L1, L2) is present in each of the feed lines (+UZ, -UZ) to the link circuit capacitor (41).

5. Charging circuit according to Claim 4, **characterized in that** a freewheeling diode (D1) is connected between the feed lines (+UZ, -UZ), said freewheeling diode being able to absorb the charging current (I1, I2) flowing in the feed lines (+UZ, -UZ) after the constant current sources (T1, T2) have been switched off.

6. Charging circuit according to one of the preceding claims, **characterized in that**, in the drive electronics system (101), driver stages (103, 104) for the constant current sources (T1, T2) are DC-isolated from the drive signal (S) used for the parallel driving of the constant current sources (T1, T2).

7. Charging circuit according to Claim 6, **characterized in that** the drive signal (S) and the driver stages (103, 104) are DC-isolated by optocouplers (105).

## Revendications

1. Circuit de charge destiné à un convertisseur, dans lequel une première source de courant constant (T1), dans la première ligne d'amenée (+UZ) conduisant à un condensateur de circuit intermédiaire (41), limite le courant de charge (I1, I2) du condensateur de circuit intermédiaire (41), dans lequel il est prévu une deuxième source de courant constant (T2), dans la deuxième ligne d'amenée (-UZ) conduisant au condensateur de circuit intermédiaire (41), et l'électronique de commande (101) est configurée pour commander en parallèle les deux sources de courant constant (T1, T2), **caractérisé en ce qu'**un capteur de courant (102) est prévu uniquement dans l'une des lignes d'amenée (+UZ, -UZ) conduisant au condensateur de circuit intermédiaire (41), dont le signal de sortie (106) est fourni à l'électronique de commande (101).

2. Circuit de charge selon la revendication 1, **caractérisé en ce qu'**un signal de commande commun (S) destiné aux deux sources de courant constant (T1, T2) peut être généré dans l'électronique de commande (101) à partir du signal de sortie (106) du capteur de courant (102).

3. Circuit de charge selon la revendication 1 ou 2, **caractérisé en ce que** les sources de courant constant (T1, T2) peuvent être désactivées lorsque le signal de sortie (106) du capteur de courant (102) passant à travers l'électronique de commande (101) est trop élevé et peuvent être activées lorsque le signal de sortie (105) du capteur de courant (102) est trop faible.

4. Circuit de charge selon l'une des revendications précédentes, **caractérisé en ce qu'**une bobine d'arrêt (L1, L2) est respectivement prévue dans les lignes d'amenée (+UZ, -UZ) conduisant au condensateur de circuit intermédiaire (41).

5. Circuit de charge selon la revendication 4, **caractérisé en ce qu'**une diode de roue libre (P1) est connectée entre les lignes d'amenée (+UZ, -UZ), au moyen de laquelle le courant de charge (I1, I2) circulant dans les lignes d'amenée (+UZ, -UZ) peut être prélevé après la désactivation des sources de courant constant (T1, T2).

6. Circuit de charge selon l'une des revendications précédentes, **caractérisé en ce que** des étages d'attaque (103, 104) destinés aux sources de courant constant (T1, T2) dans l'électronique de commande (101) sont séparés de manière galvanique du signal de commande (S) utilisé pour la commande en parallèle des sources de courant constant (T1, T2).

7. Circuit de charge selon la revendication 6, **caractérisé en ce que** le signal de commande (S) et les étages d'attaque (103, 104) sont séparés de manière galvanique par un coupleur optique (105).
